# EUROPEAN PATENT APPLICATION

(11) **EP 4 759 775 A1**
(43) Date of publication of application: **17.06.2026**
(21) Application number: 25198748.3
(22) Date of filing: 28.08.2025
(51) Int. Cl.: C02F 1/42, C02F 1/461

(54) **A WATER SOFTENING MODULE**

(30) Priority: 11.12.2024 TR 2024018328
(71) Applicant: Arçelik Anonim Sirketi, 34445 Istanbul (TR)
(72) Inventor: TARKUC, Simge, 34445 Istanbul (TR); YESILCUBUK, Alper, 34445 Istanbul (TR); KAYISDAG, Varol, 34445 Istanbul (TR); SENGONUL, Huseyin, 34445 Istanbul (TR)

(57) **Abstract**

The present invention relates to a water softening module (1) comprising at least one resin (2) which ensures the softening of the mains water and an electrolysis unit (3) which produces a regeneration solution for regenerating the resin (2), wherein the mains water is delivered simultaneously.

## Description

The present invention relates to a water softening system for regenerating ion-exchange resins which remove hardness-causing ions from water.

Water softening systems are widely used to remove hardness-causing ions (Ca²⁺/Mg²⁺) present in the mains water. The hardness level of the mains water is an important parameter which affects the washing performance of the washing machines and washer-dryers. Hardness-causing ions reduce the washing performance by neutralizing the active components of detergents and also cause color fading by accumulating in the fabric of clothes. Another disadvantage of using hard water is that it causes limescale buildup on components such as the heating member, leading to higher energy consumption and shortened economic life of such components. Therefore, in order to ensure the desired performance in the washing systems and increase the durability of the systems, the use of softened water is preferred.

In the existing systems, ion-exchange resins are commonly used for water softening. These systems operate on the principle of replacing hardness-causing ions (Ca²⁺/Mg²⁺) with sodium (Na⁺) ions. The regeneration of the resin is generally performed using a sodium chloride (NaCl) salt solution. During the regeneration process, the resin is washed with a supersaturated sodium chloride solution to separate the calcium and magnesium ions from the resin and to rebind sodium ions. At the end of the regeneration step, the waste water enriched with calcium and magnesium ions is discharged.

However, this regeneration process has some disadvantages. A portion of the sodium chloride solution used during regeneration is discarded, which leads to environmental problems. The discharged brine causes adverse effects such as infrastructure corrosion and salinization of soil and water resources. Furthermore, during the manual loading of salt into the devices for regeneration, salt granules which spill into the washer and are not cleaned may cause corrosion risk on the appliance.

In addition to these disadvantages, the need for users to add salt to the system also reduces ease of use. Therefore, the need for alternative water softening systems which reduce environmental impact, eliminate the use of chemicals, and minimize user intervention is increasing day by day.

The present invention relates to a water softening module which regenerates ion-exchange resins through electrochemical processes in order to remove hardness from water, operates without salt, and is environmentally friendly. The said system effectively removes hardness-causing ions in the water such as calcium (Ca²⁺) and magnesium (Mg²⁺).

The aim of the present invention is the realization of a water softening module which regenerates an ion-exchange resin without requiring salt, chemicals, or additives in the water softening system.

Another aim of the present invention is to provide resin regeneration with a water softening module operating in a closed loop.

Yet another aim of the present invention is to prevent salinization of soil and water resources since no sodium chloride or similar waste will be generated due to the absence of salt use.

Unlike conventional systems, the present invention is capable of performing regeneration without salt. This provides an environmentally friendly process and prevents the release of sodium ions into the environment.

By increasing the surface area of the electrolysis cell, a larger amount of acidic and basic solutions can be produced in the same period, and thus a faster regeneration process can be achieved.

The ion-selective membrane between the anode and cathode units prevents liquid transfer and allows only ion transfer, thereby preserving the purity of the acidic and basic solutions and increasing the effectiveness of the regeneration process.

Yet another aim of the present invention is to provide an efficient, low-cost, and environmentally friendly alternative, particularly for water softening.

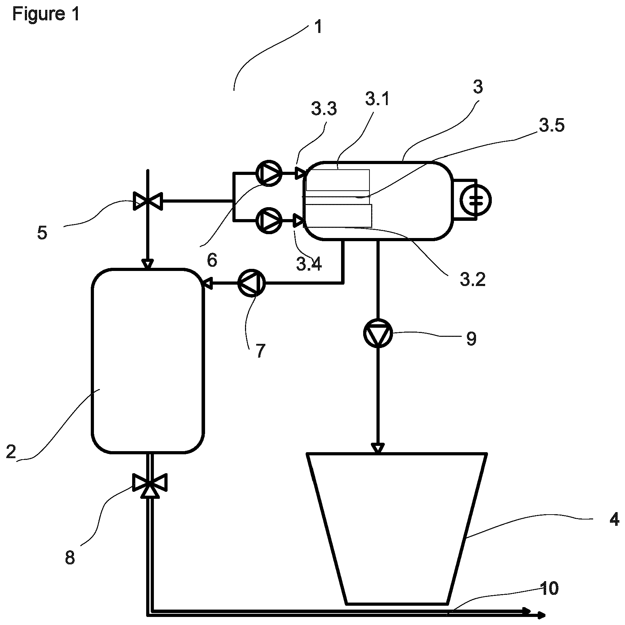

**Figure 1****:** is the schematic view of a water softening module.
**1.** Water softening module
**2.** Resin
**3.** Electrolysis unit
   3.1 Anode unit
   3.2 Cathode unit
   3.3 First inlet
   3.4 Second inlet
   3.5 Membrane
**4.** Receptacle
**5.** First valve
**6.** First pump
**7.** Second pump
**8.** Second valve
**9.** Third pump
**10.** Discharge valve

### 100. A water softening and resin regeneration method

The water softening module (1) of the present invention comprises at least one resin (2) which ensures the softening of the mains water and an electrolysis unit (3) which produces a regeneration solution for regenerating the resin (2). Thus, a water softening module (1) is provided, which operates in a closed loop, which ensures the softening of mains water, the generation of the regeneration solution, and the simultaneous regeneration of the aged resin (2) with the solution produced, without the use of external chemicals, operating efficiently and with a long economic life.

In an embodiment of the present invention, the solution required for the regeneration of the ion-exchange resin (2) is produced by means of an electrolysis cell (3). The electrolysis cell (3) consists of at least two electrodes (3.1, 3.2) and a selectively permeable (ion-exchange) membrane (3.5). The capacity of the electrolysis cell (3) increases with the increase of electrode surface area.

The water softening module (1) of the present invention comprises an electrolysis unit (3) having an anode unit (3.1) which produces an acidic regeneration solution containing a high amount or concentration of positive H⁺ ions from the mains water received and a cathode unit (3.2) which produces a basic solution containing a high amount or concentration of negative OH⁻ ions; and at least one resin (2) which softens the received mains water and which is regenerated by passing the acidic regeneration solution produced in the electrolysis unit (3) directly through the resin (2). Thus, after the mains water is softened, the regeneration solution can be produced and the resin can be regenerated simultaneously. Furthermore, the need for using salt and chemical solutions for regenerating the resin (2) is eliminated.

In an embodiment of the present invention, the electrolysis unit (3) comprises an anode unit (3.1) into which the mains water is directly received through a first inlet (3.3), a cathode unit (3.2) into which the mains water is directly received through a second inlet (3.4), and an ion-selective membrane (3.5) which blocks the water transfer and allows only controlled ion transfer between the anode unit (3.1) and the cathode unit (3.2). This structure prevents the mixing of the contents of the anode unit (3.1) and the cathode unit (3.2), where the reactions take place, thus enabling more efficient electrochemical processes. The acidic regeneration solution (pH < 7) produced in the anode unit (3.1) is in H-form and is used for the regeneration of the resin (2). The solution (0 < pH < 14) produced in the cathode unit (3.2) is directed from the electrolysis unit (3) to a receptacle (4) to be discharged.

In an embodiment of the present invention, the oxidation of the mains water directly received into the anode unit (3.1) occurs. As a result of the electrochemical reaction in the anode unit (3.1), H⁺ ions are released to form an acidic (pH < 7) regeneration solution. This acidic regeneration solution removes the hardness-causing calcium (Ca²⁺) and magnesium (Mg²⁺) ions accumulated in the resin (2) used to soften the mains water, thus regenerating the resin (2). Consequently, the economic life of the resin (2) is extended.

In an embodiment of the present invention, the reduction reaction of the mains water directly received occurs in the cathode unit (3.2). As a result of the reaction in the cathode unit (3.2), OH⁻ ions are released, and the solution becomes basic (0 < pH < 14). This basic solution is used in the cleaning and discharge steps of the water softening module (1). The basic solution produced in the cathode unit (3.2) enables the discharge of excess ions and impurities accumulated in the water softening module (1). The basic solution may be reused in this closed-loop water softening module (1) when necessary, or may be appropriately discharged.

In an embodiment of the present invention, the ion-selective membrane (3.5) positioned between the anode unit (3.1) and the cathode unit (3.2) completely blocks liquid transfer and allows only controlled ion transfer between the said two units (3.1, 3.2). This structure maintains the purity of the acidic regeneration solution and the basic solution and prevents them from mixing. Thus, the solutions produced in the anode unit (3.1) and the cathode unit (3.2) are obtained with high purity, and the regeneration process becomes more efficient.

In an embodiment of the present invention, by means of the use of the membrane (3.5) in the electrolysis unit (3), the acidic solution produced in the anode unit (3.1) and the basic solution produced in the cathode unit (3.2) can be used independently of each other. This feature improves the performance of the water softening module (1) and enables the same to operate efficiently for a longer period.

In an embodiment of the present invention, the water softening module (1) comprises an electrolysis unit (3) wherein the surface area of the anode unit (3.1) and the cathode unit (3.2) can be increased according to system requirements. This increase enables a larger amount of acidic regeneration solution and basic solution to be produced within the same time, thereby allowing more resin regeneration to be performed. Thus, the performance and efficiency of the water softening module (1) can be significantly increased.

In an embodiment of the present invention, the water softening module (1) comprises a first valve (5) which enables a portion of the mains water to be delivered directly to the resin (2) and another portion to the electrolysis unit (3) simultaneously; a first pump (6) which enables the mains water to be drawn into the electrolysis unit (3), wherein the mains water drawn into the electrolysis unit (3) is delivered to the anode unit (3.1) via a first inlet (3.3) and to the cathode unit (3.2) via a second inlet (3.4); a second pump (7) which enables the acidic solution produced in the anode unit (3.1) to be transferred to the resin (2); a receptacle (4) into which the calcium- and magnesium-rich water is delivered after the regeneration of the resin (2) by means of a second valve (8), and into which the basic solution produced in the cathode unit (3.2) is delivered by means of a third pump (9); and a discharge pump (10) which enables the water collected in the receptacle (4) to be discharged.

**In** an embodiment of the present invention, the water softening module (1) is adapted to dishwashers, washing machines, and similar white goods.

In an embodiment of the present invention, the dishwasher comprises a water softening module (1) which is positioned at any location on the body.

In an embodiment of the present invention, the dishwasher comprises a water softening module (1) in the above-described embodiments, which is provided in a washing chamber, in a detergent compartment, in any region between the body and the casing, or on the surface of the door facing the washing chamber.

In an embodiment of the present invention, the dishwasher comprises a water softening module (1) which is positioned in a washing chamber, in a detergent compartment, in any region between the body and the casing, or on the surface of the door facing the washing chamber and which has a first valve (5) which enables a portion of the mains water taking into the machine to be delivered directly to the resin (2) and another portion to the electrolysis unit (3); a first pump (6) which enables the mains water to be drawn into the electrolysis unit (3), wherein the mains water drawn into the electrolysis unit (3) is delivered to the anode unit (3.1) via a first inlet (3.3) and to the cathode unit (3.2) via a second inlet (3.4); a second pump (7) which enables the acidic solution produced in the anode unit (3.1) to be transferred to the resin (2); a receptacle (4) into which the calcium- and magnesium-rich water is delivered after the regeneration of the resin (2) by means of a second valve (8), and into which the basic solution produced in the cathode unit (3.2) is delivered by means of a third pump (9); and a discharge pump (10) which enables the water collected in the receptacle (4) to be discharged.

In an embodiment of the present invention, the dishwasher comprises a water softening module (1) comprising an electrolysis unit (3) having an anode unit (3.1) into which the mains water is directly received through a first inlet (3.3), a cathode unit (3.2) into which the mains water is directly received through a second inlet (3.4), and an ion-selective membrane (3.5) which blocks the water transfer and allows only controlled ion transfer between the anode unit (3.1) and the cathode unit (3.2).

The present invention relates to a water softening method (100), comprising the steps of:
- supplying the mains water to the resin (2) and to the electrolysis cell (3),
- the electrolysis cell (3) comprising an anode unit (3.1) and a cathode unit (3.2);
- obtaining an acidic regeneration solution with low pH (pH < 7) by oxidizing the mains water in the anode unit (3.1),
- passing the mains water through the resin (2), allowing the Ca²⁺ and Mg²⁺ ions which cause hardness in the mains water to be exchanged with the H⁺ ions on the resin (2), capturing the calcium and magnesium ions in the resin (2), and softening the water,
- supplying the acidic regeneration solution produced in the anode unit (3.1) to the ion-exchange resin (2), and
- replacing the Ca²⁺ and Mg²⁺ ions on the resin (2) with the H⁺ ions in the acidic regeneration solution and regenerating the resin (2) by converting the same back to H-form.

In an embodiment of the present invention, the water softening method (100) comprises an electrolysis cell (3) comprising an ion-selective membrane (3.5) which is positioned between the anode unit (3.1) and the cathode unit (3.2). The said ion-selective membrane (3.5) completely blocks liquid transfer and allows only controlled ion transfer between the said two units (3.1, 3.2).

In an embodiment of the present invention, the water softening method (100) comprises the step of directing the mains water (1) to the ion-exchange resin (2) and to the electrolysis unit (3) by means of at least one first valve (5).

In an embodiment of the present invention, the water softening method (100) comprises the step of taking the mains water into the electrolysis unit (3) by means of a first pump (6).

In an embodiment of the present invention, the water softening method (100) comprises the step of obtaining a high-pH basic solution through a reduction reaction of the mains water in the cathode unit (3.2).

In an embodiment of the present invention, the water softening method (100) comprises the step of directing the acidic regeneration solution produced in the anode unit (3.1) to the ion-exchange resin (2) by means of a second pump (7).

In an embodiment of the present invention, the water softening method (100) comprises the step of directing the water softened by the resin (2) to a receptacle (4) by means of a second valve (8).

In an embodiment of the present invention, the water softening method (100) comprises the step of delivering the basic solution produced in the cathode unit (3.2) to the receptacle (4) by means of a third pump (9).

In an embodiment of the present invention, the water softening method (100) comprises the step of discharging the water collected in the receptacle (4) by means of a discharge pump (10).

In an embodiment of the present invention, the water softening method (100) comprises continuing the process until the hardness ions in the mains water are fully captured by the ion-exchange resin (2).

In an embodiment of the present invention, in the water softening method (100), the second pump (7) and the third pump (9) are activated after the first pump (6) is started.

## Claims

1. A water softening module (1) **characterized by** at least one resin (2) which ensures the softening of the mains water and an electrolysis unit (3) which produces a regeneration solution for regenerating the resin (2).

2. A water softening module (1) as in Claim 1, **characterized by** an electrolysis unit (3) having an anode unit (3.1) which produces an acidic regeneration solution containing a high concentration of positive H⁺ ions from the mains water received and a cathode unit (3.2) which produces a basic solution containing a high concentration of negative OH⁻ ions; and at least one resin (2) which softens the received mains water and which is simultaneously regenerated by passing the acidic regeneration solution produced in the electrolysis unit (3) through the resin (2).

3. A water softening module (1) as in Claim 1 or 2, **characterized by** the electrolysis unit (3) comprising an anode unit (3.1) into which the mains water is directly received through a first inlet (3.3), a cathode unit (3.2) into which the mains water is directly received through a second inlet (3.4), and an ion-selective membrane (3.5) which blocks the water transfer and allows only controlled ion transfer between the anode unit (3.1) and the cathode unit (3.2).

4. A water softening module (1) as in any one of the above claims, **characterized by** an electrolysis unit (3) wherein the surface area of the anode unit (3.1) and the cathode unit (3.2) can be increased according to system requirements.

5. A water softening module (1) as in any one of the above claims, **characterized by** a first valve (5) which enables a portion of the mains water to be delivered directly to the resin (2) and another portion to the electrolysis unit (3) simultaneously; a first pump (6) which enables the mains water to be drawn into the electrolysis unit (3), wherein the mains water drawn into the electrolysis unit (3) is delivered to the anode unit (3.1) via a first inlet (3.3) and to the cathode unit (3.2) via a second inlet (3.4); a second pump (7) which enables the acidic solution produced in the anode unit (3.1) to be transferred to the resin (2); a receptacle (4) into which the calcium- and magnesium-rich water is delivered after the regeneration of the resin (2) by means of a second valve (8), and into which the basic solution produced in the cathode unit (3.2) is delivered by means of a third pump (9); and a discharge pump (10) which enables the water collected in the receptacle (4) to be discharged.

6. A dishwasher comprising a water softening module (1) as in any one of the above claims.

7. A water softening and resin regeneration method (100) **characterized by** the steps of
- supplying the mains water to the resin (2) and to the electrolysis cell (3),
- the electrolysis cell (3) comprising an anode unit (3.1) and a cathode unit (3.2);
- obtaining an acidic regeneration solution with low pH (pH < 7) by oxidizing the mains water in the anode unit (3.1),
- passing the mains water through the resin (2), allowing the Ca²⁺ and Mg²⁺ ions which cause hardness in the mains water to be exchanged with the H⁺ ions on the resin (2), capturing the calcium and magnesium ions in the resin (2), and softening the water,
- supplying the acidic regeneration solution produced in the anode unit (3.1) to the ion-exchange resin (2), and
- replacing the Ca²⁺ and Mg²⁺ ions on the resin (2) with the H⁺ ions in the acidic regeneration solution and regenerating the resin (2) by converting the same back to H-form.

8. A water softening and resin regeneration method (100) as in Claim 7, **characterized by** the step of directing the water softened by the resin (2) to a receptacle (4) by means of a second valve (8).

9. A water softening and resin regeneration method (100) as in Claim 7 or 8, **characterized by** an electrolysis cell (3) comprising an ion-selective membrane (3.5) which is positioned between the anode unit (3.1) and the cathode unit (3.2).

10. A water softening and resin regeneration method (100) as in Claim 9, **characterized by** the step of taking the mains water into the electrolysis unit (3) by means of a first pump (6).

11. A water softening and resin regeneration method (100) as in Claim 10, **characterized by** the step of obtaining a high-pH basic solution through a reduction reaction of the mains water in the cathode unit (3.2).

12. A water softening and resin regeneration method (100) as in Claim 11, **characterized by** the step of delivering the basic solution produced in the cathode unit (3.2) to the receptacle (4) by means of a third pump (9).

13. A water softening and resin regeneration method (100) as in Claim 12, **characterized by** the step of discharging the water collected in the receptacle (4) by means of a discharge pump (10).

14. A water softening and resin regeneration method (100) as in Claim 13, **characterized in that** the second pump (7) and the third pump (9) are activated after the first pump (6) is started.
